# EUROPÄISCHE PATENTANMELDUNG

(11) **EP 1 125 524 A1**
(43) Veröffentlichungstag der Anmeldung: **22.08.2001**
(21) Anmeldenummer: 01103012.9
(22) Anmeldetag: 08.02.2001
(51) Int. Cl.: A47B 88/00, F16B 12/28

(54) **Verbindungsvorrichtung für Möbelschubladen**

(30) Priorität: 15.02.2000 ES 200000349
(71) Anmelder: Rioja Calvo, Miguel Angel D., E-20800 Zarautz (Guipuzcoa) (ES)
(72) Erfinder: Rioja Calvo, Miguel Angel D., E-20800 Zarautz (Guipuzcoa) (ES)
(74) Vertreter: Feldkamp, Rainer, Dipl.-Ing.

(57) **Zusammenfassung**

Bei einer Verbindungsvorrichtung für Möbelschubladen sind an jeder Endkante der Rückwand (2a, 2b) ein oberer (5) und ein unterer Haken (6) ausgebildet, die sich senkrecht zu den Seitenwänden (1) als koplanare Verlängerung der Rückwand erstrecken, nach unten gerichtet sind und einen Schlitz aufweisen. Zwischen den Böden der Schlitze der Haken besteht ein Abstand, der in etwa dem vertikalen Abstand zwischen den Unterkanten einer oberen (7) und einer unteren Öffnung (8) der Seitenwände (1) entspricht . Die obere Öffnung (7) ist zur Oberkante der Seitenwände (1) hin offen. Die untere Öffnung (8) weist in ihrer Unterkante in Richtung auf die Frontplatte (4) der Schublade einen nach unten gerichteten stufenförmigen Absatz (9) auf, der bis zu einer Höhenlage reicht, die von der Unterkante der oberen Öffnung (7) einen größeren Abstand aufweist, als der Abstand zwischen dem Ende des unteren Hakens (6) und dem Boden des Schlitzes des oberen Hakens (5).

## Beschreibung

Die Erfindung bezieht sich auf eine Verbindungsvorrichtung der im Oberbegriff des Anspruchs 1 genannten Art.

Diese Verbindungsvorrichtung ist insbesondere für Möbelschubladen bestimmt, die durch zwei Seitenwände und eine Rückwand, die aus Metallblech hergestellt sind, bestehen, und die durch einen Boden und eine Frontplatte ergänzt sind, die üblicherweise durch massive Platten auf der Grundlage von Preßholz, von Kunststoff oder dergleichen gebildet sind,

Auf diesem Gebiet erweist es sich als vorteilhaft, wenn die Montage der Schublade durch manuellen Zusammenbau der einzelnen Teile ohne die Notwendigkeit der Verwendung von Verbindungselementen erfolgen kann, die Werkzeuge für ihre Anbringung erfordern.

Aus der ES-U-1 014 857 ist eine Verbindungsvorrichtung bekannt, bei der die Rückwand an ihren Endkanten hakenartige Vorsprünge (11) aufweist, die mit jeweiligen vertikalen Öffnungen der Seitenwände durch eine seitliche Bewegung, bei der die hakenartigen Vorsprünge (11) durch die Öffnungen hindurchlaufen, und eine vertikale Abwärtsbewegung in Eingriff gebracht werden, bei der die hakenartigen Vorsprünge (11) in ihrem Inneren die Blechdicke der Seitenplatten (1) an der Unterkante der Öffnungen (12) aufnehmen. Hierbei erreicht die hintere Platte (2) ihre Betriebsstellung, in der eine kanalartige Abbiegung eine Fortsetzung weiterer Abbiegungen in den Seitenplatten (1) bildet, um die Ränder der seitlichen und hinteren Kanten einer Grundpaltte (4) (oder eines Bodens) der Schublade aufzunehmen.

Weiterhin ist eine Vorrichtung bekannt, bei der die Seitenwände miteinander über eine Rückwand verbunden sind, die an ihren Endkanten um 90 Grad nach hinten abgewinkelte Flansche aufweist, die an ihren vertikalen Flanschen jeweils mit einem Haken, der in einer Nut arbeitet, die in einem Flansch ausgebildet ist, der am hinteren Ende der Seitenwände in das Innere der Schublade abgewinkelt ist, und mit einen Schwenk-Positionierzapfen versehen sind, der unterhalb des Hakens angeordnet ist und ohne Einrasten in eine Öffnung eintritt, die in dem hinteren Flansch der Seitenwände ausgebildet ist.

Die Aufgabe der Erfindung besteht in der Schaffung einer Verbindungsvorrichtung der eingangs genannten Art, die bei einfachem Aufbau die Montage der Schublade durch manuellen Zusammenbau der einzelnen Teile ohne die Notwendigkeit der Verwendung von Verbindungselementen ermöglicht, die Werkzeuge für ihre Anbringung erfordern.

Diese Aufgabe wird durch die im Anspruch 1 angegebenen Merkmale gelöst. Vorteilhafte Ausgestaltungen und Weiterbildungen der Erfindung ergeben sich aus den Unteransprüchen.

Bei der erfindungsgemäßen Verbindungsvorrichtung sind an jeder der Endkanten der Rückwand zumindest ein oberer Haken und ein unterer Haken ausgebildet, die sich senkrecht zu den Seitenwänden als koplanare Verlängerung der eigentlichen Rückwand erstrecken. Die oberen und unteren Haken sind nach unten gerichtet und weisen einen Schlitz mit einer Weite auf, der mit Spiel an die Blechdicke der Seitenwände angepaßt ist. Zwischen den Böden der Schlitze der oberen und unteren Haken besteht ein gegenseitiger Abstand, der mit Übermaß an den vertikalen Abstand zwischen den Unterkanten zugehöriger oberer und unterer Öffnungen angepaßt ist, die durch den Blechkörper der Seitenwände ausgebildet sind, wobei die obere Öffnung zur Oberkante der Seitenwände hin offen ist und eine Weite aufweist, die mit geeignetem Spiel an die Dicke des oberen Hakens angepaßt ist, während die untere Öffnung in ihrer Unterkante in Richtung auf die Frontplatte der Schublade einen nach unten gerichteten stufenförmigen Absatz aufweist, der bis zu einer Höhenlage reicht, die bezüglich der Unterkante der oberen Öffnung einen Abstand aufweist, der größer als der Abstand ist, der zwischen dem Ende des unteren Hakens und dem Boden des Schlitzes des oberen Hakens besteht.

Diese vorgeschlagene Vorrichtung ermöglicht eine schnelle Montage, bei der die Rückwand mittels einer Arbeitsfolge montiert wird, die folgendes umfaßt: eine erste Stellung, in der die Rückwand an ihrem unteren Teil nach vorne geneigt ist, wobei der obere Haken in der oberen Öffnung der Seitenwände angeordnet ist und der untere Haken sich durch den vorderen Teil der unteren Öffnung der Seitenwände erstreckt, der durch den nach unten gerichteten stufenförmigen Ansatz nach unten hin erweitert ist, und eine zweite Stellung, in der durch Verschwenken des oberen Hakens in der oberen Öffnung der untere Haken mit der Unterkante der unteren Öffnung ( in deren gegenüber dem nach unten gerichteten stufenförmigen Absatz höherliegenden Teil) in Eingriff kommt und die Rückwand sich vertikal in ihrer Arbeitsstellung befindet.

Diese Lösung hat den besonderen Vorteil, daß die Grundform des Profils der Rückwand exakt die gleiche sein kann, wie die der Seitenwände, wobei lediglich die oberen und unteren Haken bei dem eigentlichen Stanzvorgang ausgestanzt werden, mit dem die Rückwand hergestellt wird, während die oberen und unteren Öffnungen bei dem Stanzvorgang zur Herstellung der Seitenwände ausgebildet werden.

Im Gegensatz hierzu weist bei der zweiten der eingangs erläuterten bekannten Vorrichtungen die Rückwand eine spezielle Konstruktion auf, die einen zusätzlichen Biegeschritt zur Herstellung der nach hinten abgewickelten Flansche erfordert, in denen der obere Haken und der Positionierzapfenausgebildet werden, die mit hinteren Flanschen der Seitenwände gekoppelt werden.

Außerdem bedingt diese bekannte Konstruktion eine Verringerung der Nennkapazität der Schubladenschale aufgrund der Tatsache, daß die Breite der nach hinten abgewickelten Flansche (aufgrund des Konzeptes der Vorrichtung selbst) verhindert, daß die Ebene der Rückwand zur Anlage an den hinteren Flanschen der Seitenwände gelangt, was erforderlich wäre, um diese Nennkapazität der Schublade zu erreichen.

Im Gegensatz hierzu beeinträchtigt die hier vorgeschlagene Lösung die Nennkapazität der Schublade nicht, weil die Haken in Verlängerung der Ebene der Rückwand ausgebildet sind und die Verbindung in der Ebene der Seitenwände und nicht an hinteren abgewinkelten Flanschen hiervon herstellen.

### Zeichnungen und Bezugsziffern

Zum besseren Verständnis der Eigenart der vorliegenden Erfindung ist in den beigefügten Zeichnungen eine bevorzugte gewerbliche Ausführungsform dargestellt, die lediglich erläuternd und nicht beschränkend ist.

Figur 1 ist eine auseinandergezogene perspektivische Ansicht einer gemäß der Erfindung ausgebildeten Schublade. In dieser sind zwei alternative Rückwände mit unterschiedlicher Höhe, nämlich einer niedrigen (2a) und einer hohen (2b) Höhe, dargestellt, wobei vergrößerte Einzelheiten eingefügt sind, in denen ausführlich die oberen (5) und unteren (6) Haken, die oberen (7) und unteren (8) Öffnungen und eine der Halterungen (10) der hohen Rückwand (2b) zur Befestigung einer Umrandungsschiene (11) zu erkennen sind.

Die Figur 2 zeigt die Schublade nach Figur 1 in montiertem Zustand unter Verwendung der hohen Rückwand (2b).

Die Figuren 3 und 4 zeigen die Befestigungsfolge der Rückwand (2a, 2b) bei Betrachtung von der Außenseite der rechten Seitenwand (1) der Schublade.

Die Figuren 5 und 6 sind jeweilige Vergrößerungen der Einzelheiten V und VI, die in den Figuren 3 und 4 mit einem Kreis umgeben sind.

Die Figur 7 ist eine Seitenansicht einer Halterung (10) für die Umrandungsschiene (11), in die das geschnittene Ende dieser Umrandungsschiene (11) eingefügt ist.

Die Figuren 8 und 9 sind eine linke Seitenansicht und eine Draufsicht auf die Figur 7.

Die Figur 10 zeigt eine niedrige Rückwand (2a) bei Betrachtung von ihrer Innenseite aus.

Die Figur 11 ist die rechte Seitenansicht der Figur 10, wobei der Boden (3) der Schublade eingefügt ist.

Die Figuren 12 und 13 sind den Figuren 10 und 11 entsprechende Darstellungen, die sich jedoch auf eine hohe Rückwand (2b) beziehen.

Die Figur 14 zeigt mit üblicher Verkürzung in Höhenrichtung eine linke Seitenwand (1) bei Betrachtung von ihrer Innenseite aus, bei der wahlweisen Ausführungsform, bei der der Längsflansch (12) Bohrungen (13) aufweist.

Die Figur 15 ist eine Draufsicht von oben entsprechend der Figur 14.

Die Figur 16 ist ähnlich der Figur 14, bezieht sich jedoch auf die wahlweise Ausführungsform, bei der der Längsflansch (12) Zungen (14) aufweist, und sie zeigt die Verbindungsarten des Bodens (3) gegenüber den Längsflanschen.

Die Figur 17 ist eine Draufsicht der Figur 16, jedoch ohne den Boden (3).

In diesen Figuren sind die folgenden Bezugsziffern angegeben:
- 1.-: Seitenwände
- 2a.-: Niedrige Rückwand
- 2b.-: Hohe Rückwand
- 3.-: Boden
- 4.-: Frontplatte
- 5.-: Oberer Haken
- 6.-: Unterer Haken
- 7.-: Obere Öffnung
- 8.-: Untere Öffnung
- 9.-: Nach unten gerichteter stufenförmiger Absatz
- 10.-: Halterungen in der hohen Rückwand (2b)
- 11.-: Längsgerichtete Umrandungsschienen für eine Topfschublade
- 12.-: Innerer Längsflansch der Seitenwände (1)
- 13.-: Bohrungen in dem Flansch (12)
- 14.-: Zungen in dem Flansch (12)
- 15.-: Vordere Vorsprünge in den Rückwänden (2a, 2b)
- 16.-: Bohrungen in der hohen Rückwand (2b)
- 17.-: Untere Blindbohrungen im Boden (3)
- 18.-: Längsgerichtete untere Rillen im Boden (3).

### Erläuterung einer bevorzugten Ausführungsform

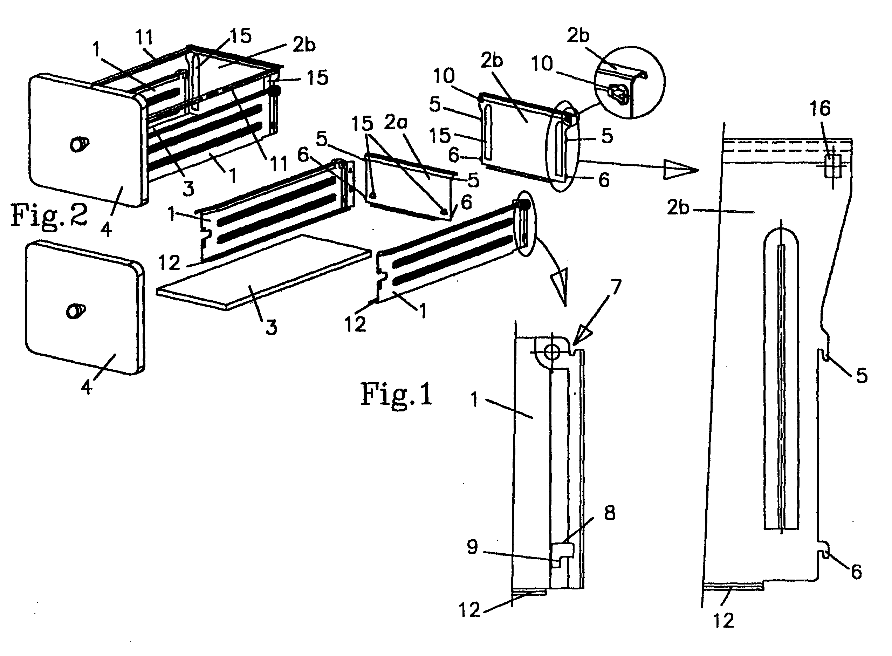

In den Zeichnungen eine bevorzugte Ausführungsform einer Schnellverbindungsvorrichtung für Möbelschubladen von der Art dargestellt, die (Figur 1) durch zwei Seitenwände (1) und eine Rückwand, die alle aus Metallblech hergestellt sind, und durch einen Boden (3) und eine Frontplatte (4) gebildet sind, die üblicherweise aus Preßholzplatten, aus Kunststoff oder dergleichen hergestellt sind. In Figur 1 sind zwei alternative Rückwände (2a, 2b) mit unterschiedlicher Höhe dargestellt, von denen die höhere (2b) für die Herstellung von Schubladen bestimmt ist, die als "Topfschubladen" bekannt sind, die Umrandungsschienen (11) aufweisen, die sich in Längsrichtung zwischen dieser hohen Rückwand (2b) und der Frontplatte (4) oberhalb der Seitenwände (1) erstrecken.

Wie dies aus dieser Figur 1 zu erkennen ist, besteht die erfindungsgemäße Vorrichtung darin, daß jede der (an den Seitenwänden zur Anlage kommenden) Endkanten dieser Rückwand (2a, 2b) ein Paar von Haken, nämlich einen oberen Haken (5) und einen unteren Haken (6), aufweist, die sich senkrecht zu den Seitenwänden (1) als koplanare Verlängerung der eigentlichen Rückwand (2a, 2b) erstrecken, wobei diese oberen (5) und unteren (6) Haken nach unten gerichtet sind und einen Schlitz mit einer Weite aufweisen, die mit Spiel an die Materialstärke der Seitenwände (1) angepaßt ist. Zwischen dem Boden der Schlitze dieser oberen (5) und unteren (6) Haken ist ein gegenseitiger Abstand vorgesehen, der größer als der vertikale Abstand zwischen den Unterkanten jeweiliger oberer (7) und unterer (8) Öffnungen ist, die in den Seitenwänden (1) ausgebildet sind. Die obere Öffnung (7) ist zur Oberkante der Seitenwände (1) hin offen und weist eine Weite auf, die mit geeignetem Spiel an die Dicke des oberen Hakens (5) angepaßt ist. Die untere Öffnung (8) weist in ihrer Unterkante einen zur Seite der Frontplatte (4) der Schublade hin ausgebildeten und nach unten gerichteten stufenförmigen Absatz (9) auf, der bis zu einer Höhenlage reicht, der bezüglich der Unterkante der oberen Öffnung (7) einen größeren Abstand aufweist, als der Abstand, der zwischen dem Ende des unteren Hakens (6) und dem Boden des Schlitzes des oberen Hakens (5) besteht. In Figur 2 ist das Ergebnis der Montage der Elemente nach Figur 1 bezüglich der erwähnten Topfschublade dargestellt.

Die untere Öffnung (8) weist damit eine im wesentlichen gekippte L-Form auf.

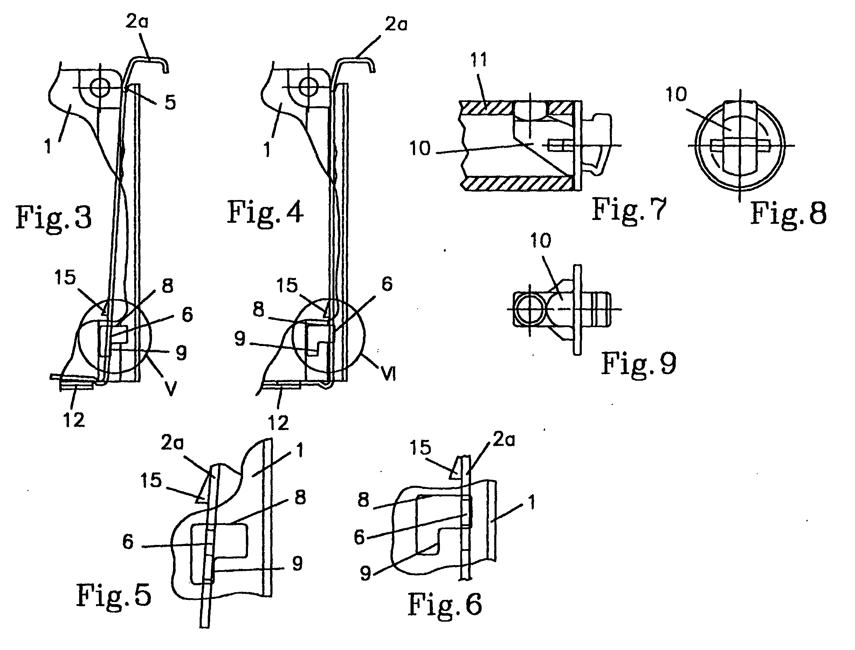

Die durch den stufenförmigen Absatz (9) gebildete Erweiterung der unteren Öffnung (8) nach unten hin weist derartige Abmessungungen auf, daß der untere Haken (6) durch diese Erweiterung hindurchlaufen kann, während die Unterkante der unteren Öffnung (8) in dem nicht erweiterten (hinteren) Bereich der Öffnung (8) in den Schlitz des Hakens (6) eintritt, wenn die Rückwand in die in den Figuren 4 und 6 gezeigte Betriebsstellung gebracht wird.

Die Schnellverbindung dieser erfindungsgemäßen Vorrichtung wird zusätzlich anhand der Figuren 3 und 4 und deren jeweiligen vergrößerten Einzelheiten in den Figuren 5 und 6 erläutert. Die Figuren 3 und 5 zeigen eine erste Montagestellung, in der der obere Haken (5) in die obere Öffnung (7) eingehängt ist und der untere Haken (6) durch den weitesten Teil der unteren Öffnung (8) hindurchgesteckt ist, d. h. vor dem stufenförmigen Absatz (9). Die Figuren 4 und 6 zeigen die abschließende Montagestellung, in der durch Drücken der Rückwand (2) nach hinten der obere Haken (5) in der oberen Öffnung (7) verschwenkt wird und der untere Haken (6) über den nach unten gerichteten stufenförmigen Absatz (9) hinwegbewegt wurde und mit dem höheren und hinteren Teil der Unterkante der unteren Öffnung (8) in Eingriff gekommen ist.

Die Form der Halterungen (10) der hohen Rückwand (2b) ist in den Figuren 7-9 gezeigt, in denen eine Zwischenscheibe zu erkennen ist, die einen hinteren Teil, der elastisch in eine entsprechende Bohrung (16) der hohen Rückwand (2b) einrastet, mit einem vorderen Teil verbindet, in dem sich ein oberer Ansatz befindet, der (Figur 7) in eine entsprechende Öffnung der Umrandungsschiene (11) einrastet.

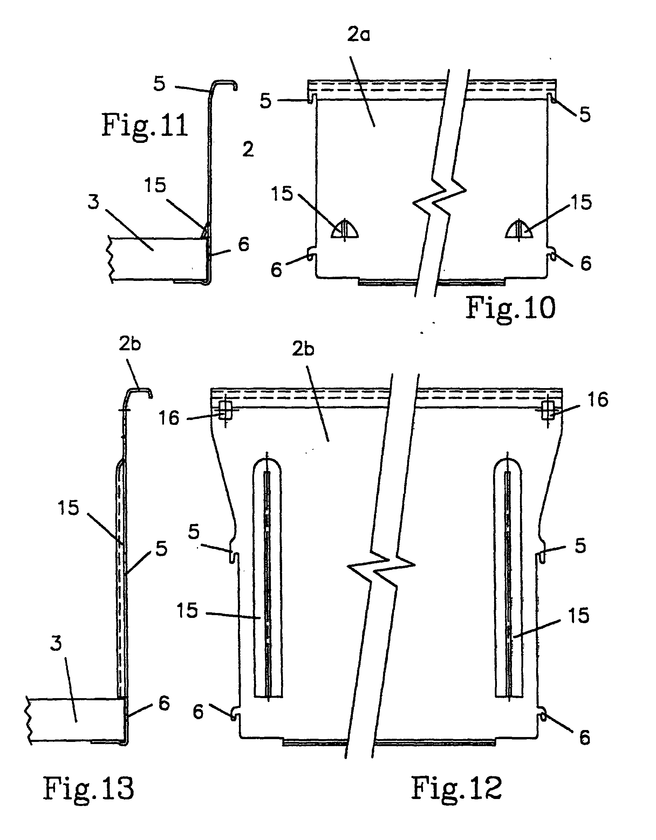

Die Figuren 10-13 zeigen die Festlegung der Halterung der Hinterkante des Bodens (3) über Krallen (15), die an sich bekannt sind, und die aus der Vorderseite oder Innenseite der Rückwand (2a, 2b) heraus vorspringen.

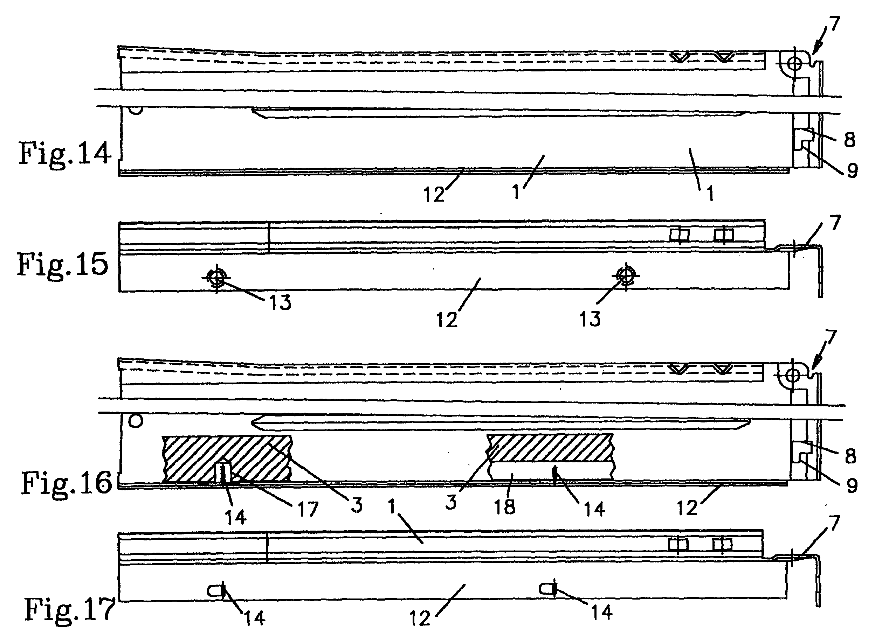

Die durch die Krallen (15) erzielte Befestigung ist in vielen Fällen für die Montage des Boden (3) ausreichend. In anderen Fällen (wie in unserem genannten Gebrauchsmuster U-9002336) bilden die Seitenwände (1) und die Rückwand (2a, 2b) eine kanalförmige Abbiegung, in die die Längskanten und die Hinterkante des Bodens (3) eintreten. Wenn aufgrund der großen Abmessungen der Schublade oder aus anderen Gründen eine bessere Befestigung erwünscht ist, so kann dies durch Schraubbefestigung durch Bohrungen (13) in (Figuren 14 und 15) den Längsflanschen (12) der Seitenwände (1) erfolgen, oder es können Blindbohrungen (17) oder längsgerichtete Kanäle (18) in der Unterseite des Bodens (3) vorgesehen sein, um eine perfekte Querversteifung zwischen dem Boden (3) und den Seitenwänden (1) zu erzielen.

## Patentansprüche

1. Verbindungsvorrichtung für Möbelschubladen, die durch zwei Seitenwände (1) und eine Rückwand (2a, 2b), jeweils aus Metallblech, und einen Boden (3) und eine Frontplatte (4) gebildet sind, die üblicherweise durch Preßholzplatten, aus Kunststoff oder dergleichen gebildet sind, dadurch gekennzeichnet, daß in jeder der Endkanten der Rückwand (2a, 2b) zwei oder mehr Haken, nämlich ein oberer Haken (5) und ein unterer Haken (6) vorhanden sind, die sich senkrecht zu den Seitenwänden (1) als koplanare Verlängerung der eigentlichen Rückwand (2a, 2b) erstrecken, daß die oberen (5) und unteren (6) Haken nach unten gerichtet sind und einen Schlitz mit einer Weite aufweisen, der mit Spiel an die Materialstärke der Seitenwände (1) angepaßt ist, daß zwischen den Böden der Schlitze der oberen (5) und unteren (6) Haken ein gegenseitiger Abstand besteht, der mit Übermaß an den vertikalen Abstand zwischen den Unterkanten jeweiliger Öffnungen, nämlich einer oberen Öffnung (7) und einer unteren Öffnung (8) angepaßt ist, die durch den Blechkörper der Seitenwände (1) ausgebildet sind, wobei die obere Öffnung (7) zur Oberkante der Seitenwände (1) hin offen ist und eine Weite aufweist, die mit geeignetem Spiel an die Dicke des oberen Hakens (5) angepaßt ist, während die untere Öffnung (8) in ihrer Unterkante in Richtung auf die Frontplatte (4) der Schublade einen nach unten gerichteten stufenförmigen Absatz (9) aufweist, der bis zu einer Höhenlage reicht, die bezüglich der Unterkante der oberen Öffnung (7) einen Abstand aufweist, der größer als der Abstand ist, der zwischen dem Ende des unteren Hakens (6) und dem Boden des Schlitzes des oberen Hakens (5) besteht.

2. Verbindungsvorrichtung nach Anspruch 1, dadurch gekennzeichnet, daß die durch den stufenförmigen Absatz (9) gebildete vordere Erweiterung der unteren Öffnung (8) derartige Abmessungen aufweist, daß eine ungehinderte Bewegung des unteren Hakens (6) durch die Öffnung (8) hindurch möglich ist.

3. Verbindungsvorrichtung nach Anspruch 1 oder 2, dadurch gekennzeichnet, daß die untere Öffnung (8) eine gekippt-"L"-förmige Gestalt aufweist.
